# EUROPÄISCHE PATENTSCHRIFT

(11) **EP 0 554 747 B1**
(45) Veröffentlichungstag und Bekanntmachung des Hinweises auf die Patenterteilung: **25.09.1996**
(21) Anmeldenummer: 93101072.2
(22) Anmeldetag: 25.01.1993
(51) Int. Cl.: C08G 18/08, C08G 18/62, C09D 175/04

(54) **Beschichtungsmittel, ein Verfahren zu ihrer Herstellung und ihre Verwendung zur Herstellung von Beschichtungen**
Coatings, process for their preparation and their use for the preparation of coatings
Revêtements, procédé pour leur préparation et leur utilisation

(30) Priorität: 07.02.1992 DE 4203510
(43) Veröffentlichungstag der Anmeldung: 11.08.1993
(73) Patentinhaber: BAYER AG, 51368 Leverkusen (DE)
(72) Erfinder: Schwindt, Jürgen, Dr., W-5090 Leverkusen 1 (DE); Reiff, Helmut, Dr., W-5090 Leverkusen 1 (DE); Kubitza, Werner, Dipl.-Ing., W-5090 Leverkusen 1 (DE)

(56) Entgegenhaltungen:
- EP-A- 0 192 113
- EP-A- 0 193 685
- EP-A- 0 206 059
- BE-A- 6 402 684

## Beschreibung

Die Erfindung betrifft ein neues wäßriges Beschichtungsmittel auf Basis einer in Wasser gelost und/oder dispergiert vorliegenden, kationisch modifizierten Polyolkomponente, bestehend im wesentlichen aus einem höhermolekularen Polyadditions-, Polykondensations- oder Polymerisationsharz und gegebenenfalls einem Reaktivverdünner und einer hierin emulgiert vorliegenden Polyisocyanatkomponente, ein Verfahren zur Herstellung derartiger Beschichtungsmittel und ihre Verwendung zur Herstellung von Beschichtungen.

Wäßrige Lacksysteme gewinnen zunehmend an Bedeutung aus wirtschaftlichen und aus ökologischen Gründen. Die Substitution konventioneller Lacksysteme geht jedoch langsamer vonstatten als das anfangs erwartet wurde.

Das hat zahlreiche Gründe. So haben wäßrige Dispersionen häufig noch Nachteile hinsichtlich der Verarbeitung im Vergleich zu organisch gelösten Lacksystemen. Bei wäßrigen Lösungen hingegen gibt es das Problem der ausreichenden Wasserlöslichkeit einerseits sowie der daraus sich gegenläufig ableitenden geringeren Wasserbeständigkeit der Überzüge im Vergleich zu konventionell gelösten Lacksystemen. Hinzu kommen auch hier Verarbeitungsprobleme, die sich vielfach aus der hohen Viskosität und der Viskositätsanomalie ergeben und die bisher durch die Mitverwendung organischer Hilfslösungsmittel überwunden wurden. Die Menge der hierbei einsetzbaren Hilfslösungsmittel ist jedoch begrenzt, da andernfalls der ökologische Sinn wäßriger Systeme verwischt wird.

Aus diesem Grund wurden in Melaminharz-vernetzten Bindemittelsystemen (US-PS 4 031 052, 4 171 294, 4 276 210 bzw. DE-OS 2 446 760 oder 2 847 532) bereits wasserverdünnbare Reaktivverdünner eingesetzt, die einerseits die Löslichkeitseigenschaften der Polymersysteme günstig beeinflussen, andererseits aber in die Überzüge durch Melaminharzvernetzung miteingebaut wurden. Allerdings ist die Reaktivität mancher wäßriger Melaminharze derart gering, daß vielfach so hohe Vernetzungstemperaturen erforderlich sind, daß die Reaktivverdünner bereits vor der Vernetzung aus den Überzügen entweichen können.

In jüngster Zeit sind auch wäßrige Zweikomponenten-Polyurethansysteme bekannt geworden (DE-OS 3 829 587), deren Bindemittel aus einem in Wasser gelöst oder dispergiert vorliegenden Polyacrylatharz in Kombination mit einem in dieser Dispersion oder Lösung emulgiert vorliegenden Polyisocyanat mit freien Isocyanatgruppen besteht. Es handelt sich hierbei im wesentlichen um lösungsmittelfreie Systeme, was bereits aus dem Umstand ersichtlich ist, daß die Lösungsmittel, die bei der Herstellung der Polymerisatharze verwendet worden sind, vor der Herstellung der wäßrigen Zubereitung entfernt werden. Diese bekannten Systeme des Standes der Technik gestatten die Herstellung von hochwertigen Überzügen, die bezüglich ihrer lacktechnischen Eigenschaften weitgehend aus analog aufgebauten, lösungsmittelhaltigen Beschichtungsmitteln hergestellt worden sind.

Jetzt wurde überraschenderweise gefunden, daß wäßrige Zweikomponenten-Polyurethanlacke, deren Polyolkomponente nicht anionisch sondern kationisch modifiziert ist, eine wesentlich längere Topfzeit (Potlife) aufweisen und ebenso wie analoge Systeme auf Basis von anionisch modifizierten Polyhydroxylverbindungen zur Herstellung von hochwertigen Lacküberzügen geeignet sind. Diese erfindungsgemäßen, nachstehend näher beschriebenen Beschichtungsmittel weisen Topfzeiten von weit mehr als 8 Stunden und oftmals bis zu mehreren Tagen auf.

Gegenstand der Erfindung ist ein, gegebenenfalls die üblichen Hilfs- und Zusatzstoffe enthaltendes, wäßriges Zweikomponenten-Beschichtungsmittel, dessen Bindemittel im wesentlichen aus einer Kombination aus
a) einer in Wasser gelöst und/oder dispergiert vorliegenden Polyolkomponente einer (mittleren) Hydroxylzahl von 15 bis 200 mg KOH/g, bestehend im wesentlichen aus
   a1) einer höhermolekularen Polyolkomponente, bestehend ihrerseits im wesentlichen aus mindestens einem ionisch modifizierten, wasserverdünnbaren, Hydroxylgruppen aufweisenden Polyadditions-, Polymerisations- und/oder Polykondensationsharz eines über 500 liegenden Molekulargewichts Mn und gegebenenfalls
   a2) bis zu 10 Gew.-%, bezogen auf das Gewicht der Komponente a1), eines Reaktivverdünners, bestehend aus mindestens einer wasserlöslichen Verbindung mit einem unter 500 liegenden Molekulargewicht Mn mit mindestens einer gegenüber Isocyanatgruppen reaktionsfähigen Gruppe, und
b) einer in der wäßrigen Lösung und/oder Dispersion der Polyolkomponente a) emulgiert vorliegenden Polyisocyanatkomponente mit einem NCO-Gehalt von 5 bis 25 Gew.-%

in, einem Äquivalentverhältnisverhältnis von Isocyanatgruppen der Komponente b) zu aktiven Wasserstoffatomen der Komponente a) von 0,5:1 bis 5:1 entsprechenden Mengen besteht, dadurch gekennzeichnet, daß die Komponente a1) chemisch eingebaute Ammoniumgruppen aufweisende Komponenten in einer solchen Menge enthält, daß der Gehalt der Komponente a1) an chemisch eingebauten Ammoniumgruppen 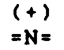 bei 8 bis 450 Milliäquivalenten pro 100 g Feststoff liegt.

Gegenstand der Erfindung ist auch ein Verfahren zur Herstellung eines derartigen Beschichtungsmittels durch Vermischen einer wäßrigen Lösung oder Dispersion einer Polyolkomponente a) des Hydroxylzahlbereichs 15 bis 200 mg KOH/g, bestehend aus
a1) mindestens einem wasserverdünnbaren, Hydroxylgruppen aufweisenden, ionisch modifizierten Polyadditions-, Polymerisations- oder Polykondensationsharz eines über 500 liegenden Molekulargewichts Mn, sowie gegebenenfalls
a2) bis zu 10 Gew.-%, bezogen auf das Gewicht von a1) eines Reaktivverdünners, bestehend aus mindestens einer wasserlöslichen Verbindung eines unter 500 liegenden Molekulargewichts Mn mit mindestens einer gegenüber Isocyanatgruppen reaktionsfähigen Gruppe mit
b) einer Polyisocyanatkomponente mit einem NCO-Gehalt von 5 bis 25 Gew.-% unter Bildung einer Emulsion des Polyisocyanats in der in Wasser gelöst und/oder dispergiert vorliegenden Polyolkomponente a),
wobei die Mengenverhältnisse der Einzelkomponenten einem Äquivalentverhältnis von Isocyanatgruppen zu gegenüber Isocyanatgruppen reaktionsfähigen Gruppen der organischen Komponenten a) von 0,5:1 bis 5:1 entsprechen und wobei gegebenenfalls mitverwendete Hilfs- und Zusatzstoffe dem System vor der Zugabe des Polyisocyanats b) einverleibt werden, dadurch gekennzeichnet, daß man eine Polyolkomponente a) verwendet, deren Hauptbestandteil a1) chemisch eingebaute Ammoniumgruppen 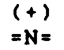 in einer Menge von 8 bis 450 Milliäquivalenten pro 100 g Feststoff enthält.

Gegenstand der Erfindung ist schließlich auch die Verwendung derartiger Beschichtungsmittel zur Herstellung von luft- undloder wärmetrocknenden Beschichtungen.

Die in den erfindungsgemäßen Beschichtungsmitteln in Wasser gelöst und/oder dispergiert vorliegende Polyolkomponente a) weist eine (mittlere) Hydroxylzahl von 15 bis 200, vorzugsweise 40 bis 160 mg KOH/g und vorzugsweise eine mittlere Hydroxylfunktionalität von mindestens 2,5, insbesondere von mindestens 3 auf. Sie besteht aus einer höhermolekularen Polyolkomponente a1) mit einem über 500 liegenden Molekulargewicht Mn oder aus einem Gemisch einer derartigen Komponente a1) mit bis zu 10 Gew.-%, bezogen auf das Gewicht von a1), eines wasserlöslichen Reaktivverdünners, bestehend aus mindestens einer organischen Verbindung mit einem unter 500 liegenden Molekulargewicht Mn mit mindestens einer gegenüber Isocyanatgruppen reaktionsfähigen Gruppe.

Im allgemeinen handelt es sich bei den wäßrigen Lösungen und/oder Dispersionen der Komponente a) um solche, die pro 100 Gew.-Teilen an organischen, gegenüber Isocyanatgruppen reaktionsfähigen Verbindungen a1) und gegebenenfalls a2) 65 bis 400, vorzugsweise 100 bis 240 Gew.-Teile Wasser aufweisen.

Die erfindungswesentliche Komponente a1) besteht aus mindestens einem Hydroxylgruppen aufweisenden Polyadditions-, Polykondensations- undloder Polymerioationsharz eines über 500, vorzugsweise bei 1500 bis 5000 liegenden Molekulargewicht Mn und einer Hydroxylfunktionalität von mindestens 2, im allgemeinen von mindestens 3. Die Komponente a) enthält zumindest teilweise, vorzugsweise ausschließlich solche höhermolekularen Komponenten a1) die einen die Löslichkeit oder Dispergierbarkeit der Komponente al) in Wasser bewirkenden Gehalt an eingebauten Ammoniumgruppen 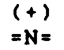 aufweisen. Grundsätzlich möglich, im allgemeinen jedoch nicht bevorzugt ist die Verwendung von solchen Gemischen a1) von höhermolekularen Polyhydroxylverbindungen, die sowohl auf diese Weise kationisch modifizierte Polyole als auch nicht ionisch modifizierte Polyole darstellen, vorausgesetzt, der Anteil der kationisch modifizierten Polyole ist ausreichend hoch, um die Dispergierbarkeit bzw. die Löslichkeit der Gesamtmischung zu gewährleisten. Der Gehalt der höhermolekularen Polyolkomponente a1) an chemisch eingebauten Ammoniumgruppen 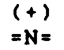 liegt bei 8 bis 450, vorzugsweise 25 bis 250 Milliäquivalenten pro 100 g Feststoff.

Die Molekulargewichte Mn beziehen sich auf solche Werte, die (im Falle von Molekulargewichten von bis zu 5000) dampfdruckosmometrisch in Dioxan und Aceton bestimmt werden, wobei bei differierenden Werten der niedrige Wert als korrekt angesehen wird und im Falle von Molekulargewichten von über 5000 auf die membranosmometrisch in Aceton bestimmten Werte.

Die kationische Modifizierung der höhermolekularen Polyhydroxylverbindungen der Komponente a1) erfolgt im allgemeinen durch Einbau von tert. Stickstoffatomen und deren nachträgliche Überführung in eine Ammoniumgruppe durch Neutralisation mit einer Säure oder durch Quaternierung mit einem Quaternierungsmittel.

Als Komponente a1) bzw. als Teil der Komponente a1) geeignete höhermolekulare Polyhydroxylverbindungen sind Polyadditions-, Polykondensations- und/oder Polymerisationsprodukte die den oben gemachten Definitionen entsprechen. Oftmals enthalten diese Verbindungen sowohl Segmente die durch eine Polyadditionsreaktion als auch solche, die durch eine Polykondensationsreaktion bzw. als auch solche, die durch eine Polymerisationsreaktion entstanden sind.

Beispiele für Verbindungen, die als Komponente a1) bzw. als Teil der Komponente a1) verwendbar sind, oder die durch eine einfache Neutralisation oder Quaternierung in derartige Verbindungen überführt werden können sind:
(i) Polyetherpolyole mit eingebauten tert. Stickstoffatomen, die durch Propoxylierung und/oder Ethoxylierung von Aminstickstoff aufweisenden Startermolekülen herstellbar sind. Derartige Polyetherpolyole sind beispielsweise die Propoxylierungs- und/oder Ethoxylierungsprodukte von Ammoniak, Ethanolamin, Triethanolamin, Ethylendiamin oder von Gemischen derartiger Amine.
(ii) Den oben gemachten Ausführungen entsprechende, tert. Stickstoffatome aufweisende Polyester- oder Polyamidharze, die durch Polykondensation von mehrwertigen Ausgangskomponenten, gegebenenfalls unter Mitverwendung von einwertigen Ausgangskomponenten nach bekannten Verfahren durch Polykondensation von Alkoholen und Carbonsäuren, wie sie z.B. in Römpp's Chemielexikon, Band 1, Seite 202, Frankh'sche Verlagsbuchhandlung, Stuttgart, 1966, definiert oder bei D.H. Solomon, The Chemistry of Organic Filmformers, S. 75-101, John Wiley & Sons Inc., New York, 1967, beschrieben sind.
   Ausgangsmaterialien für die Herstellung der Polykondensationsharze sind beispielsweise
   - 1- bis 6-, vorzugsweise 2- bis 4-wertige Alkohole des Molekulargewichtsbereichs 32 bis 500, vorzugsweise 62 bis 250 wie Ethylenglykol, Propylenglykol, Butandiole, Neopentylglykole, Cyclohexandimethanole, 2-Ethylpropandiol-1,3, Hexandiole, Etheralkohole wie Di- und Triethylenglykole, oxyethylierte Bisphenole; perhydrierte Bisphenole, ferner Trimethylolethan, Trimethylolpropan, Glycerin, Pentaerythrit, Dipentaerythrit, Mannit und Sorbit, einwertige, kettenabbrechende Alkohole wie Methanol, Propanol, Butanol, Cyclohexanol und Benzylalkohol;
   - mehrwertige Carbonsäuren oder Carbonsäureanhydride des Molekulargewichtsbereichs 100 bis 300 wie Phthalsäure, Phthalsäureanhydrid, Isophthalsäure, Terephthalsäure, Tetrahydrophthalsäure, Hexahydrophthalsäure, Trimellitsäureanhydrid, Pyrromellitanhydrid, Maleinsäureanhydrid, Adipinsäure oder Bernsteinsäureanhydrid;
   - aromatische oder gesättigte aliphatische Monocarbonsäuren wie beispielsweise Benzoesäure, Hexahydrobenzoesäure, Butylbenzoesäure, Cocosfettsäuren oder α-Ethylhexansäsure;
   - olefinisch ungesättigte Fettsäuren und Derivate von olefinisch ungesättigten Fettsäuren wie beispielsweise Leinöl-, Sojaöl-, Holzöl-, Saffloröl-, Ricinenöl-, Baumwollsaatöl-, Erdnußöl- oder Tallölfettsäure, synthetische, olefinisch ungesättigte C₁₂-C₂₂-Fettsäuren, sowie durch Konjugierung, Isomerisierung oder Dimerisierung solcher ungesättigter Fettsäuren erhaltene Derivate;
   - die den letztgenannten natürlichen Fettsäuren entsprechenden Öle, d.h. Leinöl, Sojaöl, Holzöl, Saffloröl, Ricinenöl, Baumwollsaatöl, Erdnußöl, Tallöl oder auch Ricinusöl;
   - tert. Stickstoffatome aufweisende Amine und/oder Alkohole wie N-Methyldiethanolamin, N-Methyldipropanolamin, N-Butyldiethanolamin, N-Butyldipropanolamin, N-Stearyldiethanolamin, N-Stearylpropanolamin, Triethanolamin, Tripropanolamin, Hydroxyethylmorpholin, 2-Hydroxypropylmorpholin, Hydroxyethylpiperazin, 2-Hydroxypropylpiperazin, sowie deren einfachen Alkoxylierungsprodukte mit einem unter 3000 liegenden Molekulargewicht Mn.
(iii) Tert. Stickstoffatome aufweisende, den oben gemachten Ausführungen entsprechende, Urethangruppen aufweisende Polyole, die in an sich bekannter Weise aus den üblichen Ausgangsmaterialien der Polyurethanchemie zugänglich sind.
   Zur Herstellung derartiger Polyurethane können beispielsweise die zuletztgenannten, vorzugsweise mindestens difunktionellen, niedermolekularen Ausgangskomponenten mit tert. Stickstoffatomen und gegenüber Isocyanatgruppen reaktionsfähigen Gruppen; Polyesterpolyole mit oder ohne eingebauten tert. Stickstoffatomen mit einem über 250 und bis zu 10 000, vorzugsweise bei 1000 bis 5000 liegenden Molekulargewicht Mn; Polyetherpolyole eines vergleichbaren Molekulargewichtsbereichs Mn mit oder ohne eingebauten Stickstoffatomen, einfache mehrwertige Alkohole des Molekulargewichtsbereichs 62 bis 250 der bereits oben beispielhaft genannten Art oder beliebige Gemische derartiger Polyhydroxylverbindungen mit organischen Polyisocyanaten unter Verwendung eines Isocyanat-Unterschusses umgesetzt werden, wobei Art und Mengenverhältnisse der Reaktionspartner so gewählt werden, daß Urethan-modifizierte Polyhydroxylverbindungen resultieren, die den obengenannten Bedingungen bezüglich des Gehalts an tert. Stickstoffatomen, des Molekulargewichts und der OH-Zahl entsprechen.
   Zur Herstellung derartiger Harze geeignete Polyisocyanate der Polyurethanchemie wie beispielsweise Hexamethylendiisocyanat, Isophorondiisocyanat, 4,4'-Diisocyanato-dicyclohexylmethan, 2,4- und/oder 2,6-Diisocyanatotoluol und/oder die isomeren bzw. homologen Polyisocyanate oder Polyisocyanatgemische der Diphenylmethanreihe.
(iv) Den obengemachten Ausführungen entsprechende Polyhydroxypolyacrylate, die durch an sich bekannte Copolymerisation von olefinisch ungesättigten Monomeren unter Mitverwendung von sowohl solchen Monomeren, die alkoholische Hydroxylgruppen aufweisen, als auch von solchen, die eingebaute tert. Stickstoffatome aufweisen, Zur Herstellung derartiger Polyacrylatharze geeignete Monomere sind beispielsweise C₁-C₈, vorzugsweise C₁-C₂-Alkylmethacrylate wie insbesondere Methyl- oder Ethylmethacrylat; Styrol; C₁-C₈-Alkylacrylate wie Methyl-, Ethyl-, n-Propyl-, Isopropyl-, n-Butyl-, n-Hexyl- oder n-Octylacrylat; C₂-C₈-Hydroxyalkyl(meth)acrylat wie beispielsweise Hydroxyethyl(meth)acrylat, Hydroxypropyl(meth)acrylat (durch Anlagerung von Propylenoxid an (Meth)Acryloäure erhaltenes Isomerengemisch), 4-Hydroxybutyl(meth)acrylat oder beliebige Gemische derartiger Monomerer; Vinyltoluole; Vinylester wie Vinylmcetat; und tert. Stickstoffatome aufweisende Monomere wie beispielsweise die Acrylsäure- oder Methacrylsäursester von tert. Stickstoffatome aufweisenden Alkoholen wie N,N-Dimethylaminoethanol, N-(2-Hydroxyethyl)-morpholin oder -piperidin.

Grundsätzlich möglich ist auch die Herstellung von tert. Stickstoffatome aufweisenden Polyacrylatpolyolen durch Umsetzung von Stickstoff-freien Polyacrylatpolyolen aus den beispielhaft genannten Ausgmngsmaterialien unter Einbau von tert. Stickstoffatome aufweisenden Alkoholen der oben beispielhaft genannten Art über Urethanbindungen, d.h. durch Umsetzung eines Teils der Hydroxylgruppen der Polyacrylatpolyole mit tert. Stickstoff aufweisenden Isocyanato-urethanen, die vorab beispielsweise durch Umsetzung von tert. Stickstoffatome aufweisenden einwertigen Alkoholen der beispielhaft genannten Art mit einem hohen Diisocyanatüberschuß unter anschließender destillativer Entfernung des nicht umgesetzten Diisocyanatüberschusses hergestellt worden sind.

Die Komponente a1) kann aus beliebigen Gemischen der beispielhaft genannten höhermolekularen Polyhydroxylverbindungen bestehen, vorausgesetzt, diese entsprechen bezüglich des Gehalts an Ammoniumgruppen den obengemachten Ausführungen. Die Uberführung der eingebauten tert. Stickstoffatome in Ammoniumionen erfolgt, wie bereits oben ausgeführt, durch Neutralisation oder Quaternierung.

Zur zumindest teilweisen Neutralisation (Protonierung) der eingebauten basischen, tert. Stickstoffatome können insbesondere aliphatische Säuren wie beispielsweise Ameisensäure, Essigsäure, Propionsäure, Milchsäure, Malonsäure, Äpfelsäure, Weinsäure, Glyoxalsäure, Methansulfonsäure, Oxalsäure, Fumarsäure, Bernsteinsäure oder Adipinsäure verwendet werden, die entweder als wäßrige Lösung oder wasserfrei (z.B. Methansulfonsäure) eingesetzt werden können.

Die Neutralisation kann beispielsweise in Substanz, in wäßrigem Milieu oder in organischer Phase vorgenommen werden. Zur Herstellung einer wäßrigen Lösung oder Dispersion der Komponente a1) genügt es oftmals die tert. Stickstoffatome aufweisenden Polyhydroxylverbindungen mit einer wäßrigen Lösung einer zur Neutralisation geeigneten Säure zu vermischen. Falls wasserfreie, in Wasser lösliche oder dispergierbare Polyhydroxylkomponenten a) hergestellt werden sollen, empfiehlt sich eine Neutralisation mit einer wasserfreien Säure wie beispielsweise Methansulfonsäure, so daß ein wasserfreies Salz entsteht, welches zu einem beliebigen späteren Zeitpunkt durch einfaches Verrühren mit Wasser gelöst bzw. dispergiert werden kann. Auch die Mitverwendung von mit Wasser mischbaren Lösungsmitteln wie beispielsweise von Aceton bei der Neutralisation ist prinzipiell denkbar. Acetonische Lösungen der zumindest teilweise neutralisierten Polyhydroxylverbindungen können auf besonders einfacher Weise mit Wasser verrührt werden, worauf sich gewünschtenfalls eine destillative Entfernung des Acetons anschließt.

Als Alkylierungsmittel kommen die an sich bekannten Verbindungen wie beispielsweise Methylchlorid, Methylbromid, Methyliodid, Dimethylsulfat, Diethylsulfat, p-Toluolsulfonsauremethylester oder Chloracetamid in Betracht. Die Alkylierungsreaktion kann beispielsweise unter Mitverwendung von Hilfslösungsmitteln wie Aceton, Acetonitril, tert. Butanol, Essigsäureester bei 20 bis 100°C unter anschließender Entfernung des Hilfslösungsmittels durchgeführt werden. Man kann auch vorteilhaft in Gegenwart von geringen Mengen polarer, hochsiedender Lösungsmittel alkylieren, die dann nicht entfernt werden und gegebenenfalls als Koaleszenzmittel wirken, wie beispielsweise N-Methylpyrrolidon, Propylenglykol-diacetat, Glycerintriacetat, Propylenglykol-n-butyletheracetat oder Propylenglykol-methyletheracetat.

Die gegebenenfalls mitverwendete Polyolkomponente a2), d.h. der reaktive Verdünner besteht aus mindestens einer, im Sinne der Isocyanat-Additionsreaktion mindestens monofunktionellen, vorzugsweise di- bis tetrafunktionellen, wasserlöslichen Verbindung eines unter 500, vorzugsweise eines unter 300 liegenden Molekulargewichts Mn.

In Betracht kommen monofunktionelle Verbindungen wie beispielsweise n-Hexanol, n-Octanol oder auch Amide wie beispielsweise C-Caprolactam. Vorzugsweise handelt es sich bei den Verbindungen der Komponente a2) jedoch um mehrwertige, ggf. Ether- und/oder Estergruppen aufweisende Alkohole des Molekulargewichts bereichs 62 bis 300. Geeignet sind wasserlösliche mindestens zweiwertige Verbindungen wie beispielsweise Ethylenglykol, Propylenglykol, die isomeren Butandiole, Pentandiole, Hexandiole, Octandiole, die den gemachten Angaben bezüglich des Molekulargewichts entsprechenden Polyethylenglykole oder Polypropylenglykole, Glycerin, Trimethylolpropan, Pentaerythrit, Sorbit, Mannit oder den gemachten Angaben bezüglich des Molekulargewichts entsprechende Ethoxylierungsrungs- bzw. Propoxylierungaprodukte dieser höherfunktionellen Alkohole.

Beliebige Gemische der beispielhaft genannten Verbindungen können selbstverständlich ebenfalls verwendet werden.

Die gegebenenfalls mitverwendete Komponente a2) liegt in den erfindungsgemäßen Beschichtungsmitteln in einer Menge von bis zu 10, vorzugsweise von bis zu 5 Gew.-%, bezogen auf das Gewicht der Komponente al) vor, wobei Art und Mengenverhältnisse der Einzelkomponenten a1) und a2) so gewählt werden, daß Gemische a) resultieren, die den oben gemachten Ausführungen bezüglich OH-Zahl und Hydroxylfunktionalität entsprechen.

Bei der Polyisocyanatkomponente b) handelt es sich um beliebige organische, gegebenenfalls nichtionisch-hydrophil oder kationisch modifizierte Polyisocyanate mit aliphatisch, cycloaliphatisch, araliphatisch und/oder aromatisch gebundenen, freien Isocyanatgruppen, die bei Raumtemperatur vorzugsweise flüssig sind. Feste Polyisocyanatharze können im Prinzip auch verwendet werden, jedoch empfiehlt sich in einem solchen Falle die Mitverwendung geringer Mengen an Lösungsmitteln wie beispielsweise Toluol, Ethylacetat, Solventnaphtha, Propylenglykoletheracetat, Propylenglykoldiacetat, Dipropylenglykoldimcetat, N-Methylpyrrolidon oder Ethylenglykoldimethylether.

Die Polyisocyanatkomponente b) weist bei 23°C im allgemeinen eine Viskosität von 50 bis 10.000, vorzugsweise 50 bis 1000 mPa.s auf. Besonders bevorzugt handelt es sich bei dem Polyisocyanatgemisch mit ausschließlich aliphatisch und/oder cycloaliphatisch gebundenen Isocyanatgruppen einer zwischen 2,2 und 5,0, bevorzugt zwischen 2,2 und 3,5 liegenden (mittleren) NCO-Funktionalität und einer Viskosität bei 23°C von 50 bis 5000 mPa.s.

Als Komponente b) geeignete Polyisocyanate sind insbesondere die sogenannten "Lackpolyisocyanate" mit aromatisch oder (cyclo)aliphatisch gebundenen Isocyanatgruppen, wobei die letztgenannten aliphatischen Polyisocyanate, wie bereits ausgeführt, bevorzugt sind.

Sehr gut geeignet sind beispielsweise "Lackpolyisocyanate" auf Basis von Hexamethylendiisocyanat oder von 1-Isocyanato-3,3,5-trimethyl-5-isocyanatomethyl-cyclohexan (IPDI) und/oder 4,4'-Bis(isocyanatocyclohexyl)-methan, insbesondere solche, welche ausschließlich auf Hexamethylendiisocyanat basieren. Unter "Lackpolyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung in bekannter Weise, vorzugsweise durch Destillation von überschüssigem Ausgangsdiisocyanat bis auf einen Restgehalt von weniger als 0,5 Gew.-% befreit worden sind. Zu den bevorzugten, erfindungsgemäß zu verwendenden aliphatischen Polyisocyanaten gehören den oben genannten Kriterien entsprechende, Biuretgruppen aufweisende Polyisocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können, und die aus Gemischen von N,N',N''-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-PS 4 324 879 erhalten werden können, und die im wesentlichen aus N,N',N''-Tris-(6-isocyanatohexyl)-isocyanurat im Gemisch mit untergeordneten Mengen an seinen höheren Homologen bestehen. Insbesondere bevorzugt werden den genannten Kriterien entsprechende Gemische aus Uretdion- und/oder Isocyanuratgruppen aufweisenden Polyisocyanaten auf Basis von Hexamethylendiisocyanat, wie sie durch katalytische Oligomerisierung von Hexamethylendiisocyanat unter Verwendung von Trialkylphosphinen entstehen. Besonders bevorzugt sind die zuletzt genannten Gemische einer Viskosität bei 23°C von 50 bis 500 mPa.s und einer zwischen 2,2 und 5,0 liegenden NCO-Funktionalität.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die ebenfalls im Anschluß an ihre Herstellung vorzugsweise destillativ von überschüssigen monomeren Diisocyanaten befreit worden sind.

Besonders bevorzugt und im allgemeinen wegen der zusätzlichen emulgierenden Wirkung vorteilhaft ist die Verwendung von hydrophil modifizierten Polyisocyanaten als Komponente b) oder als Teil der Komponente b). Eine derartige Hydrophilierung der Polyisocyanate kann beispielsweise durch Umsetzung eines Teils der Isocyanatgruppen mit einwertigen, Ethylenoxideinheiten aufweisenden Polyetheralkoholen, beispielsweise den Ethoxylierungsprodukten von einfachen Alkanolen mit 5 bis 100 Ethylenoxideinheiten pro Molekül erfolgen. Derartige Polyetheralkohole bzw. ihre Herstellung sind beispielsweise in DE-OS 3 521 618 beschrieben. Eine kationische Modifizierung der Polyisocyanate kann beispielsweise dergestalt erfolgen, daß man die Polyisocyanate mit einer unterschüssigen Menge eines Aminoalkohols mit mindestens einer tert.-Aminogruppe umsetzt, die dann anschließend mit einer geeigneten Säure wie beispielsweise wasserfreier Methansulfonsäure oder durch Quaternierung in eine Ammoniumgruppe überführt wird. Besonders gut geeignetePolyisocyanate b) sind solche, die bei einem NCO-Gehalt von 5 bis 30 Gew.-% und einer NCO-Funktionalität von 2,2 bis 5,0 10 bis 250 Milliäquivalente pro 100 g an eingebauten Ammoniumgruppen 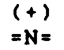 aufweisen. Die Verwendung von derartigen, kationisch modifizierten Polyisocyanaten ist besonders vorteilhaft, weil dann sowohl die Polyolkomponente a) als auch die Polyisocyanatkomponente b) eingebaute Kationen aufweisen, was einen gewissen synergistischen Effekt auslöst, dahingehend, daß in einem solchen Falle bei gleicher Gesamtkonzentration an Kationen eine bessere Emulgierbarkeit des Gesamtsystems beobachtet werden kann.

Grundsätzlich möglich ist ebenfalls eine sowohl nichtionisch-hydrophile als auch eine kationische Modifizierung der Polyisocyanatkomponente b). Ebenfalls möglich ist selbstverständlich die Verwendung von hydrophoben Polyisocyanaten ohne jegliche hydrophile Modifizierung, da auch solche Polyisocyanate in dem Gesamtsystem emulgierbar sind, da die Polyolkomponente a) die Funktion eines Emulgators für derartige Polyisocyanate ausüben kann.

In den erfindungsgemäßen Beschichtungsmitteln können neben den Komponenten a1), a2) und b) die aus der Lacktechnologie üblichen Hilfs- und Zusatzmittel vorliegen. Beispielhaft genannt seien Pigmente, Entschäumungsmittel, Verlaufsmittel, Dispergierhilfsmittel für die Pigmentverteilung, Verdickungsmittel, Sikkative, Füllstoffe, Katalysatoren für die Isocyanat-Additionsreaktion, Entschäumungsmittel oder auch (weniger bevorzugt) Hilfslösungsmittel die nicht in den Film eingebaut werden.

Zur Herstellung der gebrauchsfertigen Beschichtungsmittel wird die Polyisocyanatkomponente b) in der wäßrigen Lösung oder Dispersion der Komponente a1) emulgiert, wobei die Komponente a2) vor oder nach der Zugabe der Polyisocyanatkomponente b) in das System eingerührt werden kann. Die Durchmischung kann durch einfaches Verrühren bei Raumtemperatur erfolgen. Die Menge der Polyisocyanatkomponente b) wird dabei so bemessen, daß ein Äquivalentverhältnis von Isocyanatgruppen der Komponente b) zu gegenüber Isocyanatgruppen reaktionsfähigen Gruppen der organischen Komponenten a1) und a2) von 0,5:1 bis 5:1, vorzugsweise 0,8:1 bis 3:1 resultiert, Im übrigen werden Art und Mengenverhältnisse der organischen Bestandteile a) und b) im Rahmen der gemachten Offenbarung vorzugsweise so gewählt, daß die mittlere Funktionalität dieser Komponenten im Sinne der Isocyanat-Additionsreaktion bei mindestens 2,5 liegt.

Im Falle der Verwendung emulgierbarer Polyisocyanate der oben angegebenen Art kann man auch so verfahren, daß man die Polyisocyanate in Wasser emulgiert und dann mit der kationischen Polyhydroxylverbindung vermischt und gegebenenfalls in einem letzten Schritt den Reaktivverdünner zusetzt,

Die gegebenenfalls mitverwendeten Hilfs- und Zusatzmittel werden dem System vorzugsweise vor der Zugabe der Polyisocyanatkomponente b) durch Einrühren einverleibt.

Mit der vorliegenden Erfindung werden erstmals wäßrige kationische 2-K-Polyurethanlacksysteme zur Verfügung gestellt, die zu hochwertigen, vernetzten Beschichtungen aushärten. Dies ist darauf zurückzuführen, daß die Bindemittelkomponenten a) und b) im wesentlichen verzweigte Substanzen darstellen, die einerseits zu hochvernetzten Systemen aushärten und andererseits in ausreagiertem Zustand in Wasser weder löslich noch dispergierbar sind. Dies hat zur Folge, daß die erfindungsgemäßen Beschichtungsmittel nur eine begrenzte Topfzeit aufweisen und bei zu langem Stehen gelieren. Andererseits ist der ganz wesentliche Vorteil der erfindungsgemäßen Systeme gegenüber entsprechenden, anionisch modifizierten Systemen darin zu sehen, daß die Topfzeit, wie bereits oben ausgeführt, wesentlich verlängert ist. Neben den besonderen ökologischen Aspekten dieser neuen Lacksysteme und den technischen Vorteilen günstigerer Verarbeitungsviskosität und Fließeigenschaften besteht für den Fachmann die zusätzliche Möglichkeit, die Lackeigenschaften durch die Wahl der Reaktivverdünner beliebig zu beeinflussen, So können an sich spröde Beschichtungen über elastifizierend wirkende Reaktivverdünner elastischer eingestellt werden. Dem Lackfachmann ist so bekannt, daß z.B. langkettige Diole elastifizierend wirken.

Andererseits kann man in einem Bindemittelsystem mit relativ geringer Vernetzungsdichte durch tri- oder polyfunktionelle Reaktivverdünner härtere und widerstandsfähigere Überzüge schaffen.

Die Härtung der Überzüge kann vorzugsweise bei Raumtemperatur aber auch unter üblichen Einbrennbedingungen erfolgen. Dabei hängt der Einbau der Reaktivverdünner von der Reaktivität der Polyisocyanate und/oder der Katalyse einerseits, andererseits von den gewählten Härtungsbedingungen ab. So sollten leichter flüchtige Reaktivverdünner vorzugsweise für Raumtemperaturhärtung oder leicht erhöhte Härtungstemperatur bevorzugt werden. Bei höheren Einbrenntemperaturen und langen Vernetzungszeiten empfiehlt sich dann die Verwendung weniger flüchtiger Reaktivverdünner.

Die erfindungsgemäßen wäßrigen Bindemittelsysteme eignen sich zur Beschichtung beliebiger wasserresistenter Substrate, insbesondere zur Herstellung von Luft- oder Wärme-trocknenden Beschichtungen auf Holz, Beton, Mauerwerk oder metallischen Substreten aber auch für den Korrosionsschutz von Metall auf beispielsweise handentrosteten Stählen und als Lacke auf dem Automobilsektor, insbesondere auf kationischen Primern.

In den nachfolgenden Beispielen beziehen sich alle Prozentangaben auf das Gewicht.

### Polyhydroxylverbindungen

### Polyester 1:

Poly-neopentylglykoladipat vom Molekulargewicht Mn 1000

### Polyester 2:

Poly-1,6-hexandiol-neopentylglykoladipat vom Molekulargewicht Mn 1700 (Gewichtsverhältnis der Diole: 3:2)

### Polyester 3:

Polyethylenglykoladipat vom Molekulargewicht Mn 1750

### Polyether 1:

Einwertiger Polyetheralkohol des Molekulargewichts 2150, hergestellt durch Alkoxylierung von n-Butanol unter Verwendung eines Gemischs aus Ethylenoxid und Propylenoxid im Gewichtsverhältnis EO:PO = 4:1.

### Polyether 2:

Auf 3-Ethyl-3-hydroxymethyloxetan gestarteter monofunktioneller Ethylenoxid-Polyether vom Molekulargewicht 1210.

### Polyisocyanate

### Polyisocyanat 1:

Zu 250 g einer 70 %igen Lösung von Isophorondiisocyanattrimerisat in ®Solvesso 100 gibt man bei 50°C unter Rühren 15 g Polyether 2 und 15 g Hydroxyethyl-morpholin, erwärmt auf 100°C und hält 2 Stunden bei dieser Temperatur. Nach Abkühlen auf 80°C wird mit 3 Tropfen Zinnoctoat katalysiert, 30 Minuten bei dieser Temperatur gehalten und 60 %ig in Methoxypropylacetat gelöst (61,6 g). Bei 50°C wird nun abschließend mit 10,15 g Dimethylsulfat in 90 g Methoxypropylacetat alkyliert. Nach 1 Stunde wird auf Raumtemperatur abgekühlt.

Man erhält eine 50 %ige Lösung eines wasserdispergierbaren kationischen Polyisocyanatharzes vom NCO-Gehalt 10,2 %.

### Polyisocyanat 2:

Zu 300 g einer 50 %igen Lösung von Isophorondiisocyanattrimerisat in Propylenglykoldiacetat gibt man bei 50°C unter Rühren 37,5 g Polyether 2, erwärmt auf 100°C und hält 2 Stunden bei dieser Temperatur. Nach Abkühlen auf 80°C wird mit 1 Tropfen Zinnoctoat, gelöst in 3,4 g Propylenglykoldiacetat gelöst, katalysiert. Man hält 2 Stunden bei dieser Temperatur und kühlt dann auf Raumtemperatur ab.

Man erhält eine 55 %ige Lösung eines wasserdispergierbaren Polyisocyanatharzes vom NCO-Gehalt 13,0 % und einer Viskosität von 370 mPa.s/23°C.

### Polyisocyanat 3:

Man wiederholt die Herstellung von Polyisocyanat 2, verwendet jedoch soviel weniger Propylenglykoldiacetat, daß man eine 60 %ige Lösung vom NCO-Gehalt 13,0 % und der Viskosität 780 mPa.s/23°C erhält.

### Polyisocyanat 4:

Zu 750 g Hexamethylendiisocyanattrimerisat mit einem NCO-Gehalt von 21,5 % fügt man unter Rühren 132 g eines auf Methylglykol gestarteten Polyethylenoxidalkohol vom Molekulargewicht 350. Man erwärmt auf 110°C und hält 2,5 Stunden bei dieser Temperatur. Nach Abkühlen erhält man ein farbloses Harz mit einem NCO-Wert von 16,7 %.

### Polyisocyanat 5:

Hydrophil modifiziertes Polyisocyanat mit einem NCO-Gehalt von 18,4 % auf Basis eines Hexamethylendiisocyanattrimerisats mit einem NCO-Gehalt von 21,6 % und ethoxyliertem n-Butanol des Molekulargewichts 1145, hergestellt gemäß Beispiel 1 der US-PS 4 663 377.

### Herstellung von wäßrigen Dispersionen a1) von kationisch modifizierten Polyhydroxylverbindungen

### Beispiel 1

Zu 157,5 g (0,157 Mol) Polyester 1 und 18,74 g (0,157 Mol) N-Methyldiethanolamin gibt man bei 50°C 123,8 g (0,472 Mol) 4,4'-Diisocyanato-dicyclohexylmethan (techn. Isomerengemisch), erwärmt auf 100°C und hält 2 Stunden bei dieser Temperatur. Nun wird in 253 ml Aceton gelöst und der NCO-Gehalt bestimmt. Bei 30°C versetzt man mit 29,6 g (0,281 Mol) Diethanolamin, rührt 10 Minuten nach und versalzt mit 11,34 g (0,126 Mol) DL-Milchsäure. Nach 5 Minuten wird mit 775 ml Wasser dispergiert und anschließend das Lösungsmittel im Vakuum abdestilliert.

Man erhält eine feinteilige Dispersion mit folgenden Kenndaten: 30 % Feststoff, pH 5.

Der Festkörper hat eine OH-Zahl von 87 und enthält in 100 g 41 meq. Ammoniumstickstoff.

### Beispiel 2

Zu 165,2 g (0,165 Mol) Polyester 1 und 19,7 g (0,165 Mol) N-Methyldiethanolamin gibt man bei 50°C 115,1 g (0,439 Mol) 4,4'-Diisocyanato-dicyclohexylmethan (techn. Isomerengemisch), erwärmt auf 100°C und hält 2 Stunden bei dieser Temperatur. Nun wird in 253 ml Aceton gelöst und der NCO-Gehalt bestimmt. Bei 30°C versetzt man mit 17,9 g (0,170 Mol) Diethanolamin und 1,6 g (0,001 Mol) Isophorondiamin, rührt 10 Minuten nach und versalzt mit 12 g (0,104 Mol) 85%iger Phosphorsäure. Nach 5 Minuten wird mit 780 ml Wasser dispergiert und anschließend das Lösungsmittel im Vakuum abdestilliert.

Man erhält eine feinteilige Dispersion mit folgenden Kenndaten; 31,7 % Feststoff, pH 4,7.

Der Festkörper hat eine OH-Zahl von 57 und enthält in 100 g 44,8 meq. Ammoniumstickstoff.

### Beispiel 3

Zu 165,2 g (0,165 Mol) Polyester 1 und 19,7 g (0,165 Mol) N-Methyldiethanolamin gibt man bei 50°C 115,1 g (0,439 Mol) 4,4'-Diisocyanato-dicyclohexylmethan (techn. Isomerengemisch), erwärmt auf 100°C und hält 2 Stunden bei dieser Temperatur. Nun wird in 253 ml Aceton gelöst und der NCO-Gehalt bestimmt. Bei 30°C versetzt man mit 19,2 g (0,183 Mol) Diethanolamin, rührt 10 Minuten nach und versalzt mit 13,4 g (0,149 Mol) DL-Milchsäure, gelöst in 20 ml Wasser. Nach 5 Minuten wird mit 760 ml Wasser dispergiert und anschließend das Lösungsmittel im Vakuum abdestilliert.

Man erhält eine feinteilige Dispersion mit folgenden Kenndaten; 32,4 % Feststoff, pH 4,7.

Der Festkörper hat eine OH-Zahl von 63 und enthält in 100 g 44,7 meq. Ammoniumstickstoff.

### Beispiel 4

Zu 204,6 g (0,117 Mol) Polyester 3 und 13,9 g (0,117 Mol) N-Methyldiethanolamin gibt man bei 50°C 81,5 g (0,311 Mol) 4,4'-Diisocyanato-dicyclohexylmethan (techn. Isomerengemisch), erwärmt auf 100°C und hält 3 Stunden bei dieser Temperatur. Nun wird in 253 ml Aceton gelöst und der NCO-Gehalt bestimmt. Bei 30°C versetzt man mit 12,4 g (0,118 Mol) Diethanolamin, rührt 10 Minuten nach und versalzt mit 9,5 g (0,105 Mol) DL-Milchsäure, gelöst in 20 ml Wasser. Nach 5 Minuten wird mit 750 ml Wasser dispergiert und anschließend das Lösungsmittel im Vakuum abdestilliert.

Man erhält eine feinteilige Dispersion mit folgenden Kenndaten; 33,1 % Feststoff, pH 5,6.

Der Festkörper hat eine OH-Zahl von 41 und enthält in 100 g 32 meq. Ammoniumstickstoff.

### Beispiel 5

In einem 3 l-Rührkolben mit wirksamem Blattrührer, Rückflußkühler und Thermometer sowie Gaseinlaß und -auslaß werden 318,5 g Essigsäure-n-butylester vorgelegt und mit Stickstoff gespült. Anschließend wird auf eine Innentemperatur von 110°C erwärmt. Danach werden im Verlauf von 6 Stunden eine Monomermischung von 344 g Methacrylsäure-2-hydroxyethylester, 600 g Acrylsäure-n-butylester, 346 g Methacrylsäuremethylester und 150 g Methacrylsäure-2(-N-dimethylamino)ethylester sowie eine Initiatorlösung von 50 g Azoisobutyronitril in 763 g Essigsäure-n-butylester gleichmäßig zur Vorlage zudosiert. Anschließend wird auf eine Innentemperatur von 100°C abgekühlt und mit einer Initiatorlösung von 10 g t-Butylper-2-ethylhexanoat in 94 g Essigsäure-n-butylester nachaktiviert. Es wird 4 Stunden nachgerührt und danach diese Polymerlösung mit einer Lösung von 34 g Essigsäure in 3300 g entionisiertem Wasser vereinigt. Danach wird Essigsäurebutylester zusammen mit Wasser azeotrop abdestilliert und mit frischem entionisiertem Wasser auf eine Konzentration von 37,0 Gew.-% eingestellt. Der pH-Wert dieser Dispersion liegt bei 5,9, die mittlere Viskosität bei 13 900 mPa.s (strukturviskoses Verhalten) und der mittels Laserkorrelationsspektroskopie gemessene mittlere Teilchendurchmesser bei 195 nm. Auf Glasplatten gegossene Filme sind nach Trocknung bei Raumtemperatur klar und elastisch.

### Lackbeispiele

### Vergleichsbeispiel 1

Eine 30 %ige Dispersion eines anionisch modifizierten hydroxylgruppenhaltigen Polyacrylatharzes (Hydroxylgruppengehalt der Dispersion: 1,2 %) werden mit einem hydrophoben, Isocyanuratgruppen aufweisenden Polyisocyanat auf Basis von Hexamethylendiisocyanat mit einem NCO-Gehalt von 19,8 % mittels eines Dispergators vermischt (NCO/OH-Äquivalentverhältnis = 0,25:1) und die so erhaltene Mischung auf einem Glasträger appliziert.

Die Werte für Potlife der Lackmischung sowie die mechanischen und physikalischen Werte entnimmt man Tabelle 1.

### Vergleichsbeispiele 2 bis 4

Man arbeitet wie in Vergleichsbeispiel 1 beschrieben, jedoch im Verhältnis NCO/OH = 0,5/1, 0,75/1 und 1/1. Die Werte für Potlife der Lackmischung sowie die mechanischen und physikalischen Werte entnimmt man Tabelle 1.

### Vergleichsbeispiele 5 und 6

Man arbeitet wie in Vergleichsbeispiel 1 beschrieben, jedoch im Verhältnis NCO/OH = 2/1 und 3/1. Die Werte für Potlife der Lackmischung sowie die mechanischen und physikalischen Werte entnimmt man Tabelle 1.

### Lackbeispiele 1 bis 4

Zur Herstellung von Beschichtungen wurde das OH-Gruppenhaltige, kationische Polyurethan gemäß Beispiel 3 den Polyisocyanaten 1, 2, 4 und 5 jeweils unter einem Dispergator im Verhältnis NCO/OH = 0,25/1 vermischt und die so erhaltenen Mischungen auf Glasträger appliziert.

Die Werte für Potlife des Lacks und die mechanischen und physikalischen Werte der Beschichtungen wurden in Tabelle 2 zusammengefaßt.

### Lackbeispiele 5 bis 7

Zur Herstellung von Beschichtungen wurde das kationische wasserverdünnbare Harz gemäß Beispiel 3, 2 und 1 mit dem Polyisocyanat 3 (30 %ig in Wasser) unter einem Dispergator im Verhältnis NCO/OH = 0,5/1 vermischt und die so erhaltenen Mischungen auf Glasträger appliziert.

Die Werte für Potlife des Lacks und die mechanischen und physikalischen Werte der Beschichtungen wurden in Tabelle 3 zusammengefaßt.

### Lackbeispiele 8 bis 10

Herstellung des Lacks und der Beschichtung mit den Ausgangsstoffen wie in Lackbeispiel 5 bis 7 beschrieben jedoch im NCO/OH-Verhältnis 0,75/1. Die Werte für Potlife des Lacks und die mechanischen und physikalischen Werte der Beschichtungen wurden in Tabelle 3 zusammengefaßt.

### Lackbeispiele 11 bis 13

Herstellung des Lacks und der Beschichtung mit den Ausgangsstoffen wie in Lackbeispiel 5 bis 10 beschrieben jedoch im NCO/OH-Verhältnis 1/1. Die Werte für Potlife des Lacks und die mechanischen und physikalischen Werte der Beschichtungen wurden in Tabelle 3 zusammengefaßt.

### Lackbeispiele 14 und 15

Herstellung des Lacks und der Beschichtung mit den OH-Gruppen-haltigen, kationischen Polyurethanen gemäß Beispiel 2 und 3 mit dem Polyisocyanat 3 (30 %ig in Wasser) unter einem Dispergator im NCO/OH-Verhältnis 2/1 vermischt. Die so erhaltene Mischung wurde auf Glasträger appliziert. Die Werte für Potlife des Lacks und die mechanischen und physikalischen Werte der Beschichtungen wurden in Tabelle 3 zusammengefaßt.

### Lackbeispiele 16 und 17

Herstellung des Lacks und der Beschichtung mit den Ausgangsstoffen wie in Lackbeispiel 14 bis 15 beschrieben, jedoch im NCO/OH-Verhältnis 3/1. Die Werte für Potlife des Lacks und die mechanischen und physikalischen Werte der Beschichtungen wurden in Tabelle 3 zusammengefaßt.

### Lackbeispiele 18 und 19

Herstellung des Lacks und der Beschichtung mit den Ausgangsstoffen wie in Lackbeispiel 14 bis 15 beschrieben, jedoch im NCO/OH-Verhältnis 4/1. Die Werte für Potlife des Lacks und die mechanischen und physikalischen Werte der Beschichtungen wurden in Tabelle 3 zusammengefaßt.

### Lackbeispiele 20 und 21

Herstellung des Lacks und der Beschichtung mit den OH-Gruppen-haltigen, kationischen Polyurethanen gemäß Beispiel 2 und 3 mit dem Polyisocyanat 4 (30 %ig in Wasser) unter einem Dispergator im NCO/OH-Verhältnis 0,75/1 vermischt. Die so erhaltene Mischung wurde auf Glasträger appliziert. Die Werte für Potlife des Lacks und die mechanischen und physikalischen Werte der Beschichtungen wurden in Tabelle 4 zusammengefaßt.

### Lackbeispiele 22 und 23

Herstellung des Lacks und der Beschichtung mit den Ausgangsstoffen wie in Lackbeispiel 20 bis 21 beschrieben, jedoch im NCO/OH-Verhältnis 1/1. Die Werte für Potlife des Lacks und die mechanischen und physikalischen Werte der Beschichtungen wurden in Tabelle 4 zusammengefaßt.

### Lackbeispiele 24 und 25

Herstellung des Lacks und der Beschichtung mit den Ausgangsstoffen wie in Verwendungsbeispiel 22 bis 23 beschrieben, jedoch im NCO/OH-Verhältnis 2/1. Die Werte für Potlife des Lacks und die mechanischen und physikalischen Werte der Beschichtungen wurden in Tabelle 4 zusammengefaßt.

### Lackbeispiele 26 und 27

Herstellung des Lacks und der Beschichtung mit den Ausgangsstoffen wie in Lackbeispiel 20 bis 23 beschrieben, jedoch im NCO/OH-Verhältnis 3/1. Die Werte für Potlife des Lacks und die mechanischen und physikalischen Werte der Beschichtungen wurden in Tabelle 4 zusammengefaßt.

### Lackbeispiele 28 und 29

Herstellung des Lacks und der Beschichtung mit den Ausgangsstoffen wie in Lackbeispiel 20 bis 25 beschrieben, jedoch im NCO/OH-Verhältnis 4/1. Die Werte für Potlife des Lacks und die mechanischen und physikalischen Werte der Beschichtungen wurden in Tabelle 4 zusammengefaßt.

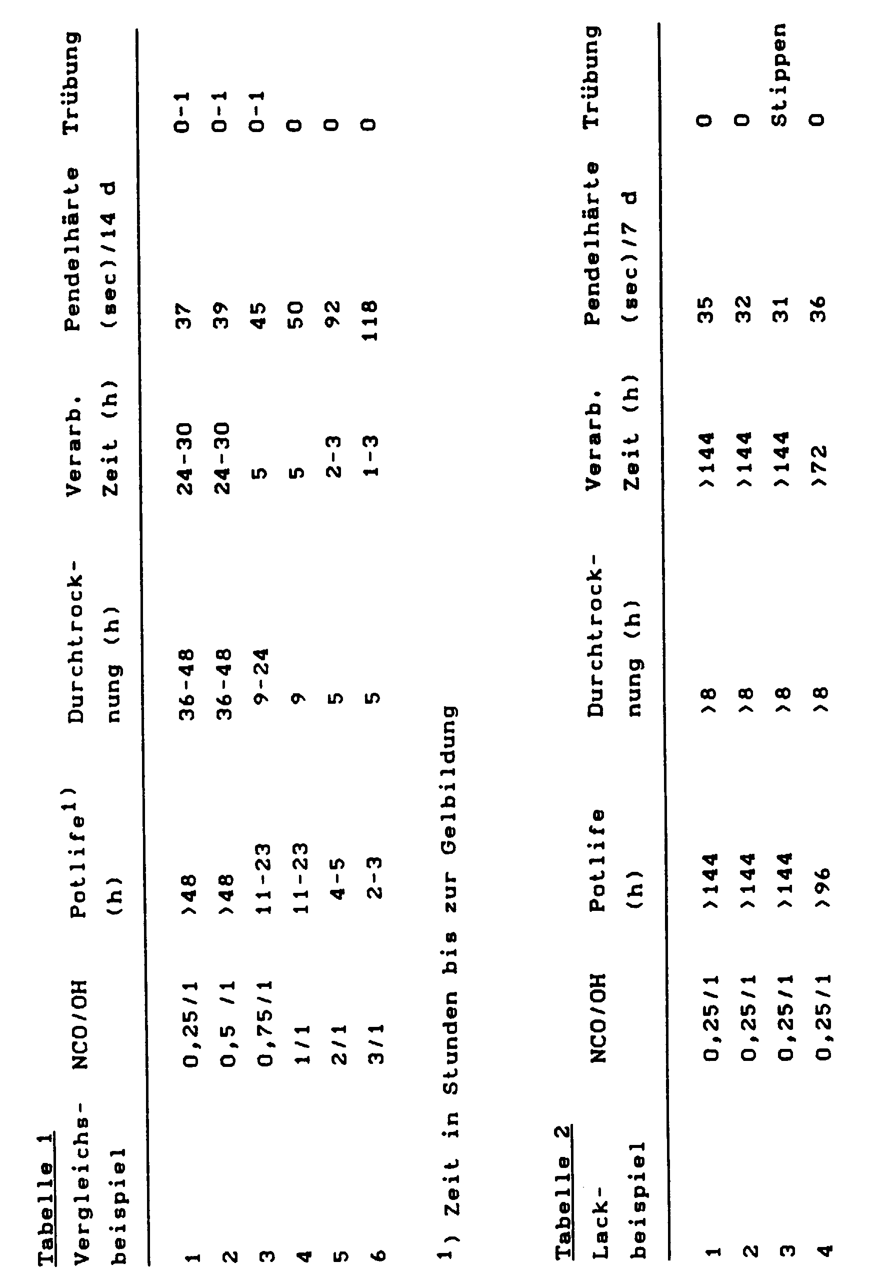

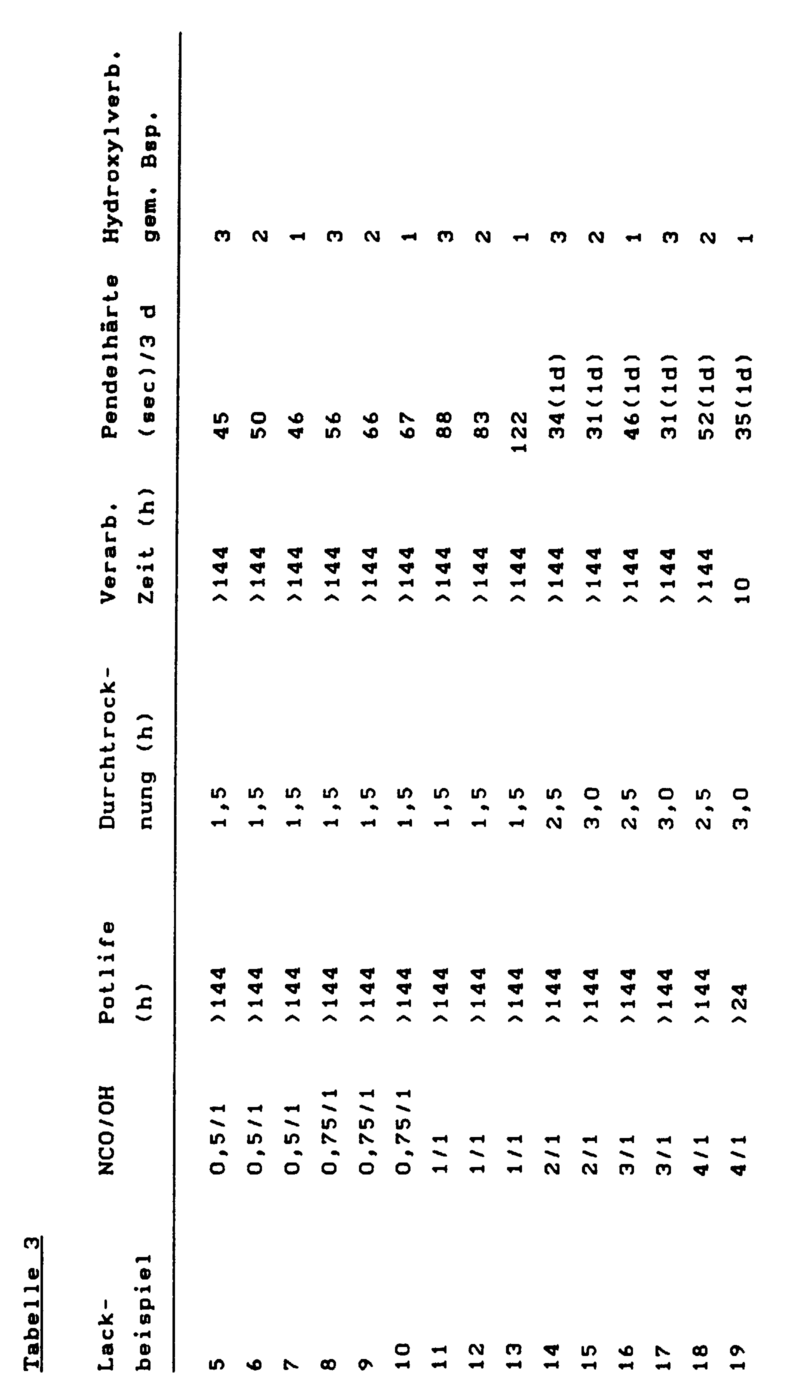

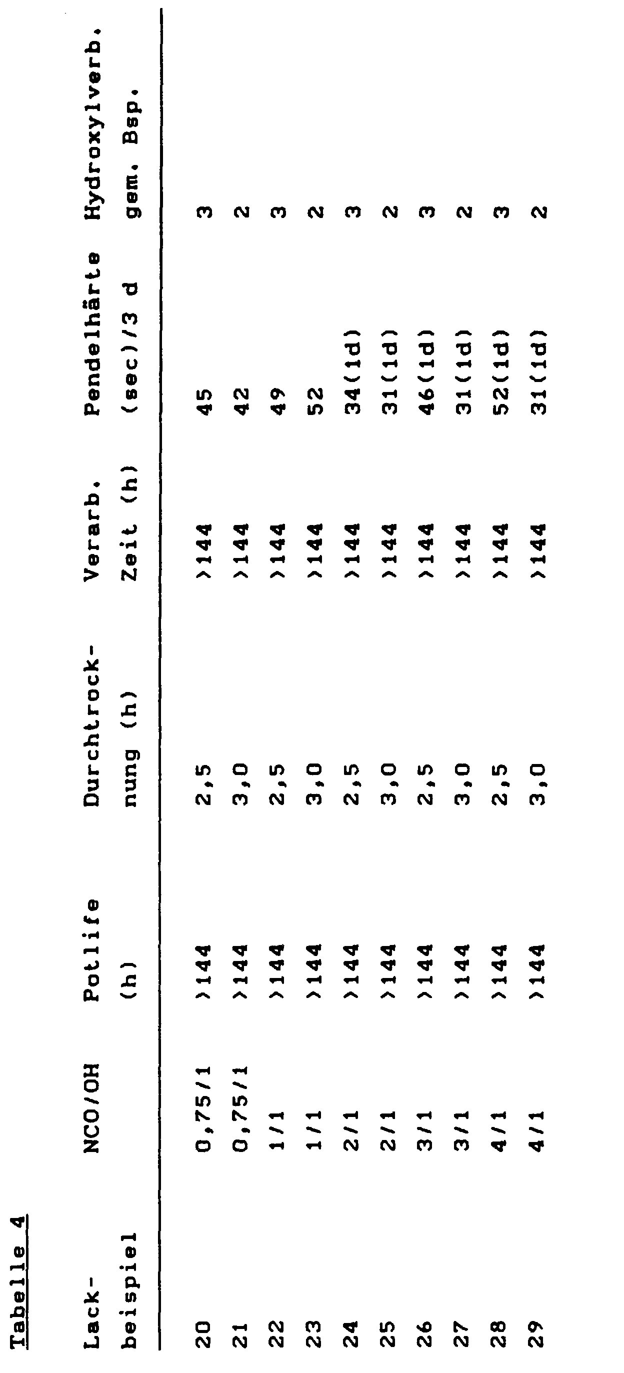

### Lackbeispiel 30

Zur Herstellung eines pigmentierten Lacks wurden 410,1 g der kationisch modifizierten Polyhydroxylverbindung gemäß Beispiel 3, sowie 2,8 g eines handelsüblichen Emulgators (25 %ige wäßrige Lösung von "Emulgator WN", Hersteller; BAYER AG, Leverkusen) und 12 g einer 5 %igen wäßrigen Lösung eines handelsüblichen Verdickungsmittels (®Borchigel DP 40, Hersteller; Fa. Gebr. Borchers AG) gemischt und dieser Mischung 85 g eines handelsüblichen Eisenoxid-Pigments (®Bayferrox 130 BM, Hersteller: Bayer AG) dispergiert.

In diese Formulierung wurden 86,8 g Polyisocyanat 2 im Verhältnis NCO;OH = 1:1 eingetragen. Der mittels eines Dissolvers homogenisierte Lack wurde auf 2 Glasträger aufgebracht und bei RT bzw, 120°C getrocknet.

| RT-Trocknung | | 120°C-Trocknung/45 Minuten | |
|---|---|---|---|
| Sandtrocknung | = 4 Stunden | | |
| Durchtrocknung | = 16 Stunden | Pendelhärte | = 100 Sekunden |
| Standzeit | >2 Tage | Glanz 60° | = 90 |
| Pendelhärte | = 20 Sekunden | | |
| Glanz 60° | = 91 | | |

### Lackbeispiel 31

In die Formulierung gemäß Lackbeispiel 30 wurden 183,6 g Polyisocyanat 2 und 51 g Wasser sowie 1,34 g Trimethylolpropan als Reaktivverdünner eingetragen, so daß das Verhältnis NCO;OH = 2:1 betrug.

| | |
|---|---|
| Sandtrocknung | = 5,5 Stunden |
| Durchtrocknung | = 16 Stunden |
| Standzeit | >2 Tage |
| Pendelhärte | = 20 Sekunden |
| Glanz 60° | = 89 |

### Lackbeispiel 32

100 g Dispersion gemäß Beispiel 5 werden unter einem Dissolver mit 41 g Polyisocyanat 2 (NCO:OH = 1:1) homogen vermischt, die Mischung auf einen Glasträger aufgebracht und die Filmwerte nach einer Woche Trocknung bei RT bestimmt.

| | |
|---|---|
| Sandtrocknung | 100 Min |
| Pendelhärte (7d) | 161 sec |
| Wasserfestigkeit (7d) | 0 |
| Lackbenzinfestigkeit (7d) | 0 |
| Acetonfestigkeit (7d) | 3 |

Die Mischung besitzt eine Verarbeitungszeit von mehr als 16 h und läßt sich nach 24 h noch problemlos applizieren.

### Lackbeispiel 33

100 g Dispersion gemäß Beispiel 5 werden unter einem Dissolver mit 82 g Polyisocyanat 2 (NCO:OH = 2:1) homogen vermischt, die Mischung auf einen Glasträger aufgebracht und die Filmwerte nach einer Woche Trocknung bei RT bestimmt.

| | |
|---|---|
| Sandtrocknung | 100 Min |
| Pendelhärte (7d) | 179 sec |
| Wasserfestigkeit (7d) | 0 |
| Lackbenzinfestigkeit (7d) | 0 |
| Acetonfestigkeit (7d) | 3 |

Die Mischung besitzt eine Verarbeitungszeit von mehr als 16 h und läßt sich nach 24 h noch problemlos applizieren.

### Lackbeispiel 34

100 g Dispersion gemäß Beispiel 5 werden unter einem Dissolver mit 123 g Polyisocyanat 2 (NCO:OH = 3:1) homogen vermischt, die Mischung auf einen Glasträger aufgebracht und die Filmwerte nach einer Woche Trocknung bei RT bestimmt.

| | |
|---|---|
| Sandtrockung | 140 Min |
| Pendelhärte (7d) | 176 sec |
| Wasserfestigkeit (7d) | 0 |
| Lackbenzinfestigkeit (7d) | 0 |
| Acetonfestigkeit (7d) | 3 |

Die Mischung besitzt eine Verarbeitungszeit von mehr als 16 h und läßt sich nach 24 h noch problemlos applizieren.

## Patentansprüche

1. Gegebenenfalls die üblichen Hilfs- und Zusatzstoffe enthaltendes, wäßriges Zweikomponenten-Beschichtungsmittel, dessen Bindemittel im wesentlichen aus einer Kombination aus
a) einer in Wasser gelöst und/oder dispergiert vorliegenden Polyolkomponente einer (mittleren) Hydroxylzahl von 15 bis 200 mg KOH/g, bestehend im wesentlichen aus
a1) einer höhermolekularen Polyolkomponente, bestehend ihrerseits im wesentlichen aus mindestens einem ionisch modifizierten, wasserverdünnbaren, Hydroxylgruppen aufweisenden Polyadditions-, Polymerisations- und/oder Polykondensationsharz eines über 500 liegenden Molekulargewichts Mn und gegebenenfalls
a2) bis zu 10 Gew.-%, bezogen auf das Gewicht der Komponente al), eines Reaktivverdünners, bestehend aus mindestens einer wasserlöslichen Verbindung mit einem unter 500 liegenden Molekulargewicht Mn mit mindestens einer gegenüber Isocyanatgruppen reaktionsfähigen Gruppe, und
b) einer in der wäßrigen Lösung und/oder Dispersion der Polyolkomponente a) emulgiert vorliegenden Polyisocyanatkomponente mit einem NCO-Gehalt von 5 bis 25 Gew.-%
in, einem Äquivalentverhältnisverhältnis von Isocyanatgruppen der Komponente b) zu aktiven Wasserstoffatomen der Komponente a) von 0,5:1 bis 5:1 entsprechenden Mengen besteht, dadurch gekennzeichnet, daß die Komponente al) chemisch eingebaute Ammoniumgruppen aufweisende Komponenten in einer solchen Menge enthält, daß der Gehalt der Komponente a1) an chemisch eingebauten Ammoniumgruppen 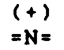 bei 8 bis 450 Milliäquivalenten pro 100 g Feststoff liegt.

2. Beschichtungsmittel gemäß Anspruch 1, dadurch gekennzeichnet, daß die mittlere Funktionalität der organischen Bestandteile der Komponenten a) und b) im Sinne der Isocyanat-Additionsreaktion bei mindestens 2,5 liegt.

3. Beschichtungsmittel gemäß Anspruch 1 und 2, dadurch gekennzeichnet, daß die Komponente a2) aus mindestens einem mehrwertigen, gegebenenfalls Ether-und/oder Estergruppen aufweisenden Alkohol des Molekulargewichtsbereichs 62 bis 300 besteht.

4. Beschichtungsmittel gemäß Anspruch 1 bis 3, dadurch gekennzeichnet, daß die Komponente b) aus nichtionisch-hydrophil und/oder kationisch modifizierten Lackpolyisocyanaten einer (mittleren) NCO-Funktionalität von 2,2 bis 3,5 besteht.

5. Verfahren zur Herstellung von Beschichtungsmitteln gemäß Ansprüchen 1 bis 4 durch Vermischen einer wäßrigen Lösung oder Dispersion einer Polyolkomponente a) des Hydroxylzahlbereichs 15 bis 200 mg KOH/g, bestehend aus
a1) mindestens einem wasserverdünnbaren, Hydroxylgruppen aufweisenden, ionisch modifizierten Polyadditions-, Polymerisations- oder Polykondensationsharz eines über 500 liegenden Molekulargewichte Mn, sowie gegebenenfalls
a2) bis zu 10 Gew.-%, bezogen auf das Gewicht von a1) eines Reaktivverdünners, bestehend aus mindestens einer wasserlöslichen Verbindung eines unter 500 liegenden Molekulargewichts Mn mit mindestens einer gegenüber Isocyanatgruppen reaktionsfähigen Gruppe mit
b) einer Polyisocyanatkomponente mit einem NCO-Gehalt von 5 bis 25 Gew.-% unter Bildung einer Emulsion des Polyisocyanats in der in Wasser gelöst oder dispergiert vorliegenden Polyolkomponente a),
wobei die Mengenverhältnisse der Einzelkomponenten einem Äquivalentverhältnis von Isocyanatgruppen zu gegenüber Isocyanatgruppen reaktionsfähigen Gruppen der organischen Komponenten a) von 0,5:1 bis 5:1 entsprechen und wobei gegebenenfalls mitverwendete Hilfs- und Zusatzstoffe dem System vor der Zugabe des Polyisocyanats b) einverleibt werden,
dadurch gekennzeichnet, daß man eine Polyolkomponente a) verwendet, deren Hauptbestandteil a1) chemisch eingebaute Ammoniumgruppen 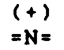 in einer Menge von 8 bis 450 Milliäquivalenten pro 100 g Feststoff enthält.

6. Verwendung der Beschichtungsmittel gemäß Anspruch 1 bis 4 zur Herstellung von Luft- und/oder Wärmetrocknenden Beschichtungen.

## Claims

1. Aqueous, two-component coating composition optionally containing conventional auxiliary substances and additives, the binder of which composition substantially consists of a combination of
a) a polyol component dissolved and/or dispersed in water with an (average) hydroxyl value of 15 to 200 mg of KOH/g, substantially consisting of
a1) a relatively high molecular weight polyol component itself essentially consisting of at least one ionically modified, water-dilutable polyaddition, polymerisation and/or polycondensation resin containing hydroxyl groups and of a molecular weight Mn of above 500 and optionally
a2) up to 10 wt.%, relative to the weight of component al), of a reactive diluent consisting of at least one water soluble compound having a molecular weight Mn of below 500 and at least one group capable of reacting with isocyanate groups, and
b) a polyisocyanate component with an NCO content of 5 to 25 wt.% emulsified in the aqueous solution and/or dispersion of the polyol component a)
in quantities corresponding to an equivalent ratio of isocyanate groups of component b) to active hydrogen atoms of component a) of 0.5:1 to 5:1, characterised in that component al) contains chemically incorporated components having ammonium groups in a quantity such that the content of chemically incorporated ammonium groups 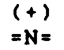 in a1) amounts to 8 to 450 milliequivalents per 100 g of solids.

2. Coating composition according to claim 1, characterised in that, for the purposes of the isocyanate addition reaction, the average functionality of the organic constituents of components a) and b) is at least 2.5.

3. Coating composition according to claims 1 and 2, characterised in that component a2) consists of at least one polyhydric alcohol, optionally containing ether and/or ester groups, with a molecular weight in the range from 62 to 300.

4. Coating composition according to claims 1 to 3, characterised in that component b) consists of nonionically-hydrophilically and/or cationically modified lacquer polyisocyanates of an (average) NCO functionality of 2.2 to 3.5.

5. Process for the production of coating compositions according to claims 1 to 4 by mixing an aqueous solution or dispersion of a polyol component a) with a hydroxyl value in the range from 15 to 200 mg of KOH/g, consisting of
a1) at least one ionically modified, water-dilutable polyaddition, polymerisation and/or polycondensation resin containing hydroxyl groups and of a molecular weight Mn of above 500 and optionally
a2) up to 10 wt.%, relative to the weight of component al), of a reactive diluent consisting of at least one water soluble compound having a molecular weight Mn of below 500 and at least one group capable of reacting with isocyanate groups, with
b) a polyisocyanate component with an NCO content of 5 to 25 wt.% to form an emulsion of the polyisocyanate in the polyol component a) which is dissolved or dispersed in water,
wherein the quantity ratios of the individual components correspond to an equivalent ratio of isocyanate groups to groups capable of reacting with isocyanate groups of the organic component a) of 0.5:1 to 5:1 and wherein any optionally used auxiliary substances and additives are incorporated into the system before addition of the polyisocyanate b),
characterised in that a polyol component a) is used, the principal constituent al) of which contains chemically incorporated ammonium groups =N= in a quantity of 8 to 450 milliequivalents per 100 g of solids.

6. Use of the coating compositions according to claims 1 to 4 for the production of air drying and/or heat drying coatings.

## Revendications

1. Agent d'enduction aqueux à deux composants contenant éventuellement les adjuvants et additifs habituels, dont le liant est constitué essentiellement par une combinaison de
a) un composant de polyol présent sous forme dissoute et/ou dispersée dans l'eau, possédant un indice d'hydroxyle (moyen) de 15 à 200 mg de KOH/g, constitué essentiellement par
a1) un composant de polyol à poids moléculaire supérieur constitué à son tour essentiellement par au moins une résine de polyaddition, de polymérisation et/ou de polycondensation ayant subi une modification ionique, diluable dans l'eau, présentant des groupes hydroxyle et possédant un poids moléculaire Mn supérieur à 500, et éventuellement par
a2) jusqu'à concurrence de 10% en poids, rapportés au poids du composant a1), d'un diluant réactif constitué par au moins un composé hydrosoluble possédant un poids moléculaire Mn inférieur à 500 et comprenant au moins un groupe apte à réagir vis-à-vis de groupes isocyanate et de
b) un composant de polyisocyanate présent sous forme émulsifiée dans la solution et/ou dans la dispersion aqueuse du composant de polyol a), possédant une teneur NCO de 5 à 25% en poids dans des quantités correspondant à un rapport d'équivalents des groupes isocyanate du composant b) aux atomes d'hydrogène actif du composant a) de 0,5:1 à 5:1, caractérisé en ce que le composant a1) contient des composants présentant des groupes ammonium incorporés par voie chimique en une quantité telle que
la teneur du composant a1) en groupes ammonium 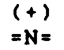 incorporés par voie chimique se situe de 8 à 450 milliéquivalents par 100 g de substance solide.

2. Agent d'enduction selon la revendication 1, caractérisé en ce que la fonctionnalité moyenne des constituants organiques des composants a) et b) se situe à au moins 2,5 dans le sens de la réaction d'addition d'isocyanate.

3. Agent d'enduction selon les revendications 1 et 2, caractérisé en ce que le composant a2) est constitué par au moins un alcool polyvalent présentant éventuellement des groupes éther et/ou ester, du domaine de poids moléculaire de 62 à 300.

4. Agent d'enduction selon les revendications 1 à 3, caractérisé en ce que le composant b) est constitué par des polyisocyanates de laques, de vernis ou de peintures ayant subi une modification non ionique-hydrophile et/ou cationique, possédant une fonctionnalité NCO (moyenne) de 2,2 à 3,5.

5. Procédé pour la préparation d'agents d'enduction selon les revendications 1 à 4, par mélange d'une solution ou d'une dispersion aqueuse d'un composant de polyol a) du domaine d'indice d'hydroxyle de 15 à 200 mg de KOH/g, constitué par
a1) au moins une résine de polyaddition, de polymérisation ou de polycondensation ayant subi une modification ionique, présentant des groupes hydroxyle, diluable dans l'eau, d'un domaine de poids moléculaire Mn supérieur à 500, et éventuellement par
a2) jusqu'à concurrence de 10% en poids, rapportés au poids de a1), d'un diluant réactif constitué par au moins un composé hydrosoluble possédant un poids moléculaire Mn inférieur à 500, comprenant au moins un groupe apte à réagir vis-à-vis de groupes isocyanate, avec
b) un composant de polyisocyanate possédant une teneur NCO de 5 à 25% en poids, avec formation d'une émulsion du polyisocyanate dans le composant de polyol . a) présent sous forme dissoute ou dispersée dans l'eau,
dans lequel les proportions des composants individuels correspondent à un rapport d'équivalents des groupes isocyanate aux groupes aptes à réagir vis-à-vis de groupes isocyanate du composant organique a) de 0,5:1 à 5:1 et dans lequel on incorpore éventuellement au système, des adjuvants et des additifs utilisés de manière conjointe, avant l'addition du polyisocyanate b),
caractérisé en ce qu'on utilise un composant de polyol a) dont le constituant principal a1) contient des groupes ammonium 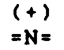 incorporés par voie chimique en une quantité de 8 à 450 milliéquivalents par 100 g de substance solide.

6. Utilisation des agents d'enduction selon les revendications 1 à 4 pour la préparation d'enductions séchant à l'air et/ou à la chaleur.
